# EUROPEAN PATENT SPECIFICATION

(11) **EP 1 807 915 B1**
(45) Date of publication and mention of the grant of the patent: **13.04.2016**
(21) Application number: 05800666.9
(22) Date of filing: 04.11.2005
(51) Int. Cl.: H02B 1/20

(54) **A MOUNTING SYSTEM FOR A SWITCHBOARD AND A METHOD FOR ASSEMBLING THE SWITCHBOARD**
MONTAGESYSTEM FÜR EINEN ELEKTRISCHEN VERTEILER UND VERFAHREN ZU SEINER MONTAGE
SYSTEME DE MONTAGE DE TABLEAU DE DISTRIBUTION ET PROCEDE D'ASSEMBLAGE D'UN TABLEAU DE DISTRIBUTION

(30) Priority: 05.11.2004 SE 0402721
(43) Date of publication of application: 18.07.2007
(73) Proprietor: ABB Technology Ltd, 8050 Zürich (CH)
(72) Inventor: THRUE, Carsten, DK-8700 Horsens (DK)
(74) Representative: Helin, William
(86) International application number: PCT/IB2005/003332
(87) International publication number: WO 2006/048756

(56) References cited:
- EP-A- 0 317 517
- DE-A1- 19 622 735
- FR-A- 2 523 802
- FR-A- 2 579 839
- US-A- 5 794 795

## Description

### TECHNICAL FIELD OF THE INVENTION AND PRIOR ART

The present invention concerns a mounting system for an electric, pneumatic or hydraulic switchboard of the type defined in the preamble of appended claim 1. The expression "switchboard", as used in this document, is intended to mean an apparatus comprising electric, pneumatic or hydraulic devices and their interconnections. The interconnections make, break, or change the connections in an electric, pneumatic or hydraulic circuit so that a number of circuits may be connected, combined and controlled. The expression therefore encompasses low-, medium- and high-voltage self-contained, floor-standing or wall-mounted switchgear assemblies (i.e. switchboards or panel-boards) and motor control centres (MCCs).

In order to exemplify such a switchboard, a low voltage switchboard comprising electric devices, such as switches, circuit breakers, transformers, contactors and motor controllers, will now be described as an illustrative but non-limiting example.

Mounting systems for low voltage switchboards usually comprise DIN-rails (i.e. steel channels having slots for mounting electric devices thereon) and cable ducts. After mounting the devices on the DIN-rails cable ducts are used in combination with the DIN-rails to establish connections between the electric devices.

The DIN-rails are either mounted on a mounting plate using screws, rivets or similar mechanical fasteners or they are mounted in a plastic cabinet that has been pre-fabricated with inserts for the apparatus. Mounting DIN-rails and cable ducts using these two methods results in the production of large switchboards since the cable ducts are mounted between the DIN-rails and several DIN-rails may need to be mounted one above the other at a distance that allows enough space for the cable ducts, which occupies space on the mounting plate and consequently lowers the amount of apparatus that can be mounted per area unit.

The mounting plate is normally the rear panel of a switchboard cabinet, which does not facilitate assembly, maintenance or repair work since the cabinet's side-, top- and bottom panels will hinder access to its rear panel. Furthermore the rear side of the mounting plate becomes covered with penetrating screw threads or rivet ends, which can be problematic if the rear side is accessible or if other items are to be mounted on that side.

A mounting system addressing these problems and having the features of the preamble of appended claim 1 is known through US 5 794 795 A. However, it is of course an on-going attempt to improve systems of that type.

### SUMMARY OF THE INVENTION

More exactly, it is an object of the present invention to provide a system and a method enabling an easier assembly and disassembly of a said mounting unit of such a system.

This object is according to the invention obtained by, with respect to the system, providing the mounting unit with male/female elements that are arranged to be inserted into/receive and to hold corresponding female/male elements on a structure on which the entire mounting unit is to be mounted for facilitating assembly and disassembly of the entire mounting unit.

Since such a system is easier to assemble and disassemble than a system according to US 5 794 795 A, the lead-time for the entire switchboard, as well as down-time, is significantly reduced as compared to the mounting units and switchboards according to the prior art.

According to an embodiment of the invention the mounting system comprises hitching means arranged on the rear side of said mounting bars for hitching said interconnections, such as cable ducts, onto said mounting bars. The interconnections, such as cable ducts, may by this easily be moved to the rear side of the substantially horizontal mounting bars by hitching them on the horizontal bars prepared for this sake by adding said hitching means when manufactured.

According to another embodiment of the invention the entire mounting unit is arranged on a mounting fixture that allows an operator to displace the mounting unit for example by turning, sliding or tilting the mounting unit out of its operational position. According to another embodiment of the invention the mounting fixture allows an operator to rotate the mounting unit 360°.

Such a rotatable mounting fixture is for example implemented by locking the mounting unit in position while the switchboard is in operation and then unlocking the mounting unit when repair or maintenance work has to be carried out so that it may be displaced. Alternatively the mounting unit is removed from the mounting system and placed on a mounting fixture that allows an operator to displace the mounting unit, for example by rotating it by 360°. This facilitates maintenance and repair work and makes it easier for the switchboard to be assembled, disassembled or modified since the devices and their interconnections are easier to access.

According to a further embodiment of the invention each said support comprises a number of male/female elements that are arranged to be inserted into/receive and hold corresponding female/male elements on one or more of said mounting bars. This will facilitate assembly and disassembly of a mounting bar. A vertical support may for example be provided with an L-shaped groove that allows a corresponding protrusion on a horizontal mounting bar to be inserted horizontally into the top and foremost part of the groove from the front of the switchboard and then to be lowered into the lower and rearmost part of the groove.

According to another embodiment of the invention said mounting unit is provided with protrusions and said frame is provided with corresponding grooves for receiving said protrusions when mounting the mounting unit on said frame. This makes it easy to put the mounting unit into a frame of a switchboard by this slide and groove system.

According to another embodiment of the invention the mounting system comprises a covering adapted to cover the front side of said mounting bars.

It is by this possible to substantially hide the devices and their interconnections and to shield personnel from live parts. Alternatively the covering may comprise at least one transparent window or be made entirely of transparent material. According to another embodiment of the invention control and/or indication means are provided on the covering, for example on the front panel of the covering.

The present invention also concerns a low-, medium- or high-voltage switchboard comprising a mounting system having at least one mounting unit according to any of the embodiments described above.

The present invention also relates to a method for assembling an electric, pneumatic or hydraulic switchboard as disclosed in the attached claims.

Further advantages as well as advantageous features of the invention appear from the following description and the other dependent claims.

### BRIEF DESCRIPTION OF THE DRAWINGS

- Fig. 1: shows the side (a) and the front (b) of a mounting system according to the prior art, and
- Fig. 2: shows the side (a) and the front (b) of a mounting unit according to an embodiment of the present invention.

It should be noted that the figures are not drawn to scale and that the size of certain features has been exaggerated for the sake of clarity.

The following description and drawings are not intended to limit the present invention to the embodiment disclosed. The embodiment disclosed merely exemplifies the principles of the present invention.

### DETAILED DESCRIPTION OF AN EMBODIMENT OF THE INVENTION

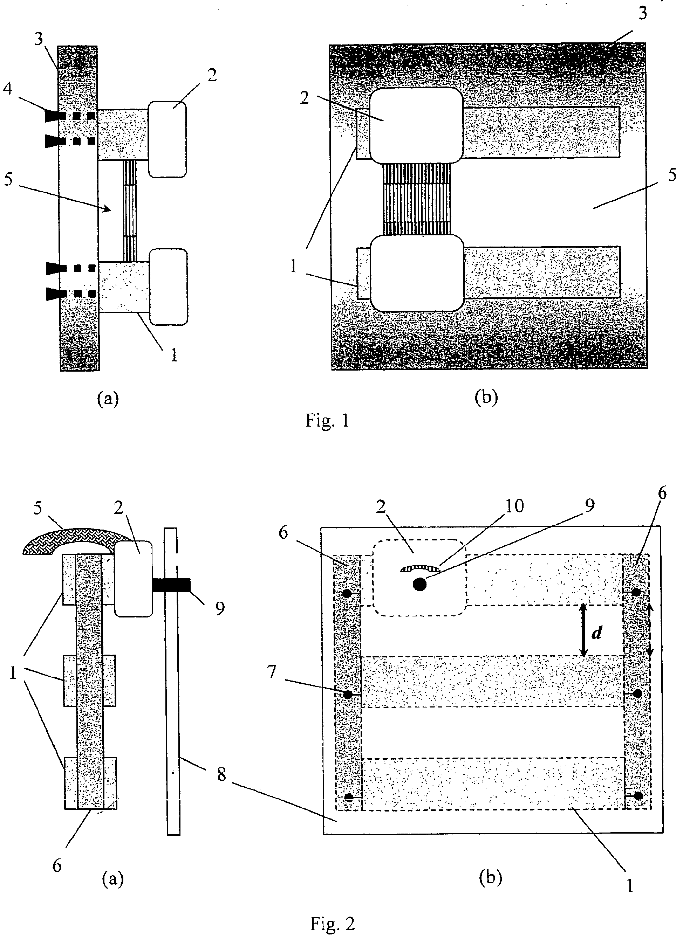

Figure 1 shows the side (a) and the front (b) of a conventional mounting system that is suitable for an electric low voltage switchboard for compact secondary substations. The mounting system comprises two DIN-rails 1 on which electric devices 2 may be mounted. The DIN-rails are mounted on the rear panel 3 of a switchboard cabinet by means of screws or rivets 4. Interconnections such as cable ducts 5 are arranged between the DIN-rails. The cable ducts 5 accommodate the wiring that connects the devices to a supply busbar located, for example, at the rear of the switchboard.
Figure 2 exemplifies a mounting unit according to an embodiment of the invention. The mounting unit comprises three horizontal DIN-rail holders 1 on which DIN-rails and electric devices 2 may be mounted. The mounting unit comprises two vertical supports 6 that are arranged to support the DIN-rail holders 1. Protrusions on each DIN-rail holder 1 are inserted into corresponding grooves 7 on the vertical supports. Similar protrusions may be provided on the mounting unit so that the entire unit may be mounted on a structure, such as a frame containing corresponding grooves. The devices 2 may be mounted on these DIN-rail holders or "mounting bars" 1 before or after the mounting bars 1 are mounted on the supports 6.

A low voltage switchboard may include one or more segregated cabinets located side by side, each having a framework (of welded steel plate for example) for mounting the cabinet sides and doors and each containing one or more mounting units according to the present invention.

Only one electric device 2 is shown in figures 2a and 2b and this device 2 is mounted on the front side of the mounting unit. Further electric devices 2 may be mounted on the same side of the DIN-rail holders 1 and all of the cable ducts 5 may then be arranged at the rear side of the mounting unit. Alternatively the electric devices 2 may be arranged on different sides of the DIN-rail holders 1, whereby the cable ducts 5 are arranged in different parts of the mounting system.

The mounting unit is covered by a cover 8, such as a steel panel, for aesthetic and safety reasons. In the example shown only control 9 and indication 10 means protrude through the cover 8, however the cover 8 may be designed to show any other component of the switchboard depending on customer requirements. Electric devices 2 and their interconnections 5 may be arranged to be accessible via a front-, back- and/or side panel of the covering 8. Since the cable ducts 5 do not occupy the space between the mounting bars 1, the distance, d, between the mounting bars may be decreased thus allowing more devices 2 to be mounted per unit area of the mounting unit.

The invention is of course not in any way restricted to the embodiments thereof described above, but many possibilities to modifications thereof would be apparent to a man with ordinary skill in the art without departing from the basic idea of the invention as defined in the appended claims. For example a "mounting bar" does not have to have a regular, flat, rectangular shape as exemplified in figures 1 and 2 but may have any shape as long as it is sufficiently strong and rigid to hold electric, pneumatic or hydraulic devices and sufficient space for interconnections is left between the mounting bars. The mounting bar may for example have a U-shaped profile or a square cross-section.

## Claims

1. A mounting system for an electric, pneumatic or hydraulic switchboard that comprises electric, pneumatic or hydraulic devices (2) respectively and their interconnections (5), said system comprising a mounting unit comprising at least one substantially vertical support (6) arranged to support a plurality of substantially horizontal mounting bars (1) arranged to hold said devices, DIN-rails being mounted on a front side of said mounting bars (1) for mounting said devices (2) thereon, said interconnections (5), such as cable ducts, being arranged on the rear side of said mounting bars, **characterized in that** the mounting unit comprises male/female elements that are arranged to be inserted into/receive and hold corresponding female/male elements on a structure on which the entire mounting unit is to be mounted for facilitating assembly and assembly of the entire mounting unit

2. The mounting system according to claim 1, **characterized in** than said mounting unit is provided with protrusions and said structure is provided with corresponding grooves for receiving said protrusions when mounting the mounting unit on said structure.

3. The mounting systems according to claim 1 or 2, **characterized in that** it comprises hitching means arranged on the rear side of said mounting bars (1) for hitching said interconnections. (5), such as cable ducts, onto said mounting bars.

4. The mounting system according to any of the preceding claims, **characterized in that** the entire mounting unit is arranged on a mounting fixture that allows an operator to displace the mounting unit.

5. The mounting system according to claim 4, **characterized in that** the mounting fixture allows an operator to turn the mounting unit 360°.

6. The mounting system according to any of the preceding claims, **characterized in that** each said support (6) comprises a number of male/female elements that are arranged to be inserted into/receive and hold corresponding female/male elements on one or more of said mounting bars (1).

7. The mounting system according to any of the preceding claims, **characterized in that** it comprises a covering (8) adapted to cover the front side of said mounting bars (1).

8. The mounting system according to claim 7, **characterized in that** it comprises control (9) and/or indication (10) means provided on said covering (8).

9. Low-, medium- or high voltage switchboard, **characterized in that** it comprises a mounting system according to any of the preceding claims.

10. A method for assembling an electric, pneumatic or hydraulic switchboard that comprises electric, pneumatic or hydraulic devices (2) respectively and their interconnections (5), the method comprising the step of mounting the devices (2) on DIN-rails arranged on a front side of substantially horizontal mounting bars (1) supported by at least one substantially vertical support and arranging interconnections (5), such as cable ducts, on the rear side of said mounting bars, .

11. The method according to claim 10, **characterized in that** it comprises the step of arranging the entire mounting unit on a mounting fixture that allows an operator to displace the mounting unit.

12. The method according to claim 10, or 11, **characterized in that** it comprises the step of providing a number of male/female elements (7) in each support (6) to be inserted into/receive and hold corresponding female/male elements on the mounting bars (1).
**characterized in that** it comprises the step of providing a number of male/female elements on the mounting unit to allow it to be mounted on a structure having corresponding female/male elements for mutual engagement

13. The method according to any of claims 10-12, **characterized in that** it comprises the step of arranging a covering (8) for covering said mounting bars (1).

14. The method according to claims 13, **characterized in that** it comprises the step of providing control (9) and/or indication means (10) on said covering (8).

## Patentansprüche

1. Montagesystem für einen elektrischen, pneumatischen oder hydraulischen Verteiler, der jeweils elektrische, pneumatische oder hydraulische Einrichtungen (2) und deren Zwischenverbindungen (5) umfasst, wobei das System eine Montageeinheit umfasst, die mindestens einen im Wesentlichen vertikalen Träger (6) umfasst, der derart angeordnet ist, dass er eine Vielzahl von im Wesentlichen horizontalen Montageleisten (1) trägt, die derart angeordnet sind, dass sie die Einrichtungen halten, wobei DIN-Schienen auf einer Vorderseite der Montageleisten (1) zum Montieren der Einrichtungen (2) darauf montiert sind, wobei die Zwischenverbindungen (5), etwa Kabelkanäle, auf der Rückseite der Montageleisten angeordnet sind, **dadurch gekennzeichnet, dass** die Montageeinheit Stecker-/Buchsenelemente umfasst, welche derart angeordnet sind, dass sie (in) korrespondierende Buchsen-/Steckerelemente auf einer Struktur, auf der die ganze Montageeinheit montiert werden soll, eingeführt werden/aufnehmen und halten können, um den Zusammenbau zu erleichtern und für den Zusammenbau der ganzen Montageeinheit.

2. Montagesystem nach Anspruch 1, **dadurch gekennzeichnet, dass** die Montageeinheit mit vorstehenden Teilen versehen ist und die Struktur mit korrespondierenden Nuten zum Aufnehmen der vorstehenden Teile beim Montieren der Montageeinheit auf der Struktur versehen ist.

3. Montagesystem nach Anspruch 1 oder 2, **dadurch gekennzeichnet, dass** es auf der Rückseite der Montageleisten (1) angeordnete Einhängemittel zum Einhängen der Zwischenverbindungen (5), etwa von Kabelkanälen, auf den Montageleisten umfasst.

4. Montagesystem nach einem der vorhergehenden Ansprüche, **dadurch gekennzeichnet, dass** die ganze Montageeinheit auf einer Montagevorrichtung angeordnet ist, die ermöglicht, dass ein Benutzer die Montageeinheit anders positioniert.

5. Montagesystem nach Anspruch 4, **dadurch gekennzeichnet, dass** die Montagevorrichtung ermöglicht, dass ein Benutzer die Montageeinheit um 360° dreht.

6. Montagesystem nach einem der vorhergehenden Ansprüche, **dadurch gekennzeichnet, dass** jeder Träger (6) eine Anzahl von Stecker-/Buchsenelementen umfasst, welche derart angeordnet sind, dass sie (in) korrespondierende Buchsen-/Steckerelemente auf einer oder mehreren der Montageleisten (1) eingeführt werden/aufnehmen und halten können.

7. Montagesystem nach einem der vorhergehenden Ansprüche, **dadurch gekennzeichnet, dass** es eine Abdeckung (8) umfasst, die derart angepasst ist, dass sie die Vorderseite der Montageleisten (1) abdeckt.

8. Montagesystem nach Anspruch 7, **dadurch gekennzeichnet, dass** es ein Steuermittel (9) und/oder ein Anzeigemittel (10) umfasst, die auf der Abdeckung (8) bereitgestellt sind.

9. Nieder-, Mittel- oder Hochspannungsverteiler, **dadurch gekennzeichnet, dass** er ein Montagesystem nach einem der vorhergehenden Ansprüche umfasst.

10. Verfahren zum Zusammenbauen eines elektrischen, pneumatischen oder hydraulischen Verteilers, der jeweils elektrische, pneumatische oder hydraulische Einrichtungen (2) und deren Zwischenverbindungen (5) umfasst, wobei das Verfahren den Schritt des Montierens der Einrichtungen (2) auf DIN-Schienen, die auf einer Vorderseite von im Wesentlichen horizontalen Montageleisten (1) angeordnet sind, die von mindestens einem im Wesentlichen vertikalen Träger getragen werden, und des Anordnens von Zwischenverbindungen (5), etwa von Kabelkanälen, auf der Rückseite der Montageleisten umfasst, **dadurch gekennzeichnet, dass** es den Schritt des Bereitstellens einer Anzahl von Stecker-/Buchsenelementen auf der Montageeinheit umfasst, um zu ermöglichen, dass sie auf einer Struktur mit korrespondierenden Buchsen-/Steckerelementen für einen gegenseitigen Eingriff montiert wird.

11. Verfahren nach Anspruch 10, **dadurch gekennzeichnet, dass** es den Schritt des Anordnens der ganzen Montageeinheit auf einer Montagevorrichtung umfasst, die ermöglicht, dass ein Benutzer die Montageeinheit anders positioniert.

12. Verfahren nach Anspruch 10 oder 11, **dadurch gekennzeichnet, dass** es den Schritt des Bereitstellens einer Anzahl von Stecker-/Buchsenelementen (7) in jedem Träger (6) umfasst, welche (in) korrespondierende Buchsen-/Steckerelemente auf den Montageleisten (1) eingeführt werden/aufnehmen und halten können.

13. Verfahren nach einem der Ansprüche 10-12, **dadurch gekennzeichnet, dass** es den Schritt des Anordnens einer Abdeckung (8) zum Abdecken der Montageleisten (1) umfasst.

14. Verfahren nach Anspruch 13, **dadurch gekennzeichnet, dass** es den Schritt des Bereitstellens eines Steuermittels (9) und/oder eines Anzeigemittels (10) auf der Abdeckung (8) umfasst.

## Revendications

1. Système de montage pour tableau de distribution électrique, pneumatique ou hydraulique comportant respectivement des dispositifs électriques, pneumatiques ou hydrauliques (2) et leurs interconnexions (5), ledit système comportant une unité de montage comportant au moins un support (6) sensiblement vertical disposé de façon à supporter une pluralité de barres (1) de montage sensiblement horizontales disposées de façon à maintenir lesdits dispositifs, des rails DIN étant montés sur une face avant desdites barres (1) de montage en vue de monter lesdits dispositifs (2) dessus, lesdites interconnexions (5), comme des fourreaux à câbles, étant disposées sur la face arrière desdites barres de montage, **caractérisé en ce que** l'unité de montage comporte éléments mâles/femelles qui sont disposés pour être insérés dans/recevoir et maintenir des éléments femelles/mâles correspondants sur une structure sur laquelle l'unité de montage tout entière est appelée à être montée pour faciliter l'assemblage et pour l'assemblage de l'unité de montage tout entière.

2. Système de montage selon la revendication 1, **caractérisé en ce que** ladite unité de montage est munie de protubérances et **en ce que** ladite structure est munie de rainures correspondantes servant à recevoir lesdites protubérances lors du montage de l'unité de montage sur ladite structure.

3. Système de montage selon la revendication 1 ou 2, **caractérisé en ce qu'**il comporte des moyens d'accrochage disposés sur la face arrière desdites barres (1) de montage pour accrocher lesdites interconnexions (5), comme des fourreaux à câbles, sur lesdites barres de montage.

4. Système de montage selon l'une quelconque des revendications précédentes, **caractérisé en ce que** l'unité de montage tout entière est disposée sur un appareil de montage qui permet à un opérateur de déplacer l'unité de montage.

5. Système de montage selon la revendication 4, **caractérisé en ce que** l'appareil de montage permet à un opérateur de tourner l'unité de montage sur 360°.

6. Système de montage selon l'une quelconque des revendications précédentes, **caractérisé en ce que** chacun desdits supports (6) comporte une multiplicité d'éléments mâles/femelles qui sont disposés pour être insérés dans/recevoir et maintenir des éléments femelles/mâles correspondants sur une ou plusieurs desdites barres (1) de montage.

7. Système de montage selon l'une quelconque des revendications précédentes, **caractérisé en ce qu'**il comporte une couverture (8) prévue pour recouvrir la face avant desdites barres (1) de montage.

8. Système de montage selon la revendication 7, **caractérisé en ce qu'**il comporte des moyens de commande (9) et/ou d'indication (10) placés sur ladite couverture (8).

9. Tableau de distribution à basse, moyenne ou haute tension, **caractérisé en ce qu'**il comporte un système de montage selon l'une quelconque des revendications précédentes.

10. Procédé d'assemblage d'un tableau de distribution électrique, pneumatique ou hydraulique comportant respectivement des dispositifs électriques, pneumatiques ou hydrauliques (2) et leurs interconnexions (5), le procédé comportant l'étape consistant à monter les dispositifs (2) sur des rails DIN disposés sur une face avant de barres (1) de montage sensiblement horizontales supportées par au moins un support sensiblement vertical et à disposer des interconnexions (5), comme des fourreaux à câbles, sur la face arrière desdites barres de montage, **caractérisé en ce qu'**il comporte l'étape consistant à mettre en place une multiplicité d'éléments mâles/femelles sur l'unité de montage pour lui permettre d'être montée sur une structure dotée d'éléments femelles/mâles correspondants en vue d'une interaction mutuelle.

11. Procédé selon la revendication 10, **caractérisé en ce qu'**il comporte l'étape consistant à disposer l'unité de montage tout entière sur un appareil de montage qui permet à un opérateur de déplacer l'unité de montage.

12. Procédé selon la revendication 10 ou 11, **caractérisé en ce qu'**il comporte l'étape consistant à mettre en place dans chaque support (6) une multiplicité d'éléments mâles/femelles (7) destinés à être insérés dans/à recevoir et à maintenir des éléments femelles/mâles correspondants sur les barres (1) de montage.

13. Procédé selon l'une quelconque des revendications 10 à 12, **caractérisé en ce qu'**il comporte l'étape consistant à disposer une couverture (8) servant à recouvrir lesdites barres (1) de montage.

14. Procédé selon la revendication 13, **caractérisé en ce qu'**il comporte l'étape consistant à mettre en place des moyens de commande (9) et/ou d'indication (10) sur ladite couverture (8).
